# EUROPEAN PATENT SPECIFICATION

(11) **EP 0 448 217 B1**
(45) Date of publication and mention of the grant of the patent: **12.04.1995**
(21) Application number: 91301195.3
(22) Date of filing: 14.02.1991
(51) Int. Cl.: B01D 29/03, B01D 29/01, B01D 39/00, B01D 35/02, A61M 5/165

(54) **Fluid filter for an automated analyzer and filter method**
Fluidfilter für einen automatischen Analysator und Filtrationsverfahren
Filtre à fluides pour un analyseur automatique et méthode de filtrer

(30) Priority: 08.03.1990 US 490197
(43) Date of publication of application: 25.09.1991
(73) Proprietor: Bayer Corporation, Wilmington, MA 01887-1069 (US)
(72) Inventor: Negersmith, Kent Martin, Carmel, New York 10512 (US); Farrell, Gregory Alan, Ridgewood, New Jersey 07450 (US)
(74) Representative: Wain, Christopher Paul

(56) References cited:
- WO-A-89/06719
- DE-A- 1 065 572
- GB-A- 2 010 695
- US-A- 4 263 140

## Description

The present invention relates to in-line fluid-type filters for use in automated clinical instrumentation, and more particularly to an in-line fluid-type filter which may be advantageously used to filter whole blood.

Clinical apparatus for the analysis of fluids is well known and is described for example, in U.S. patent specifications US-A-2,797,149, US-A-2,879,141 and US-A-3,241,432. Typically, analysis apparatus of the automated type provides for the feeding of samples in a flowing stream by means of a take-off device or probe which aspirates liquid sample from a sample container. The aspirated portion of liquid sample is then conveyed through suitable conduits for analysis.

In present day analysis apparatus, only a small quantity of sample is needed for analysis purposes. Typically, sample flow in the take-off device is at a relatively slow rate, e.g. 1.5 ml/min. The sample conduit and the conduits employed in such apparatus extending from the take-off device to the point of analysis must be relatively small. By way of example only, the sample conveying conduit may have an internal diameter of approximately .02 to .033 inch (0.51 to 0.84mm). However, such conduits can become clogged during the performance of a series of tests and this can necessitate the shutdown of the system to clear the conduit. Such clogging or other interference from debris may be the result of foreign matter in the sample or it may be caused by the presence in the sample of a naturally occurring substance such as, for example, fibrin (which acts to form the fibrous network in the coagulation of blood).

Attempts have been made to solve the clogging problem by various filtering schemes, but in fact filtering is not as simple a solution as might first appear. In any device designed to filter the sample to remove potential clog-causing matter, care must be taken to avoid restricting significantly the flow of the sample through the filtering device. In view of the relatively small sample size, the amount of sample retained in the filtering device must be kept to a minimum. It is also important when dealing with filtering of whole blood samples, that the laminar flow within the conduit be disturbed as little as possible, and that there be a smooth transition downstream from the filter so as not to disrupt the integrity of, e.g. rupture, the cells within the sample.

Filters may be provided at various locations in the conduit systems to catch the clogging or interference-causing debris. For example, U.S. patent specification US-A-3,795,149 describes a method and apparatus for supplying samples for automated analysis wherein liquid from a liquid sample container is aspirated through a filter-equipped inlet end of a probe while the latter is immersed in the liquid. The probe is subsequently removed from the container and immersed in wash liquid in a wash receptacle. Prior to immersion in another liquid sample, a fluid other than sample is flushed through the aforementioned filter in a reverse direction to cleanse it of particulate matter, the flushing being in timed relation to the movement of the probe. More particularly, the probe includes a cup-shaped filter extending over the inlet end of a take-off tube. The filter may be formed from a disc of stainless steel, for example, which is suitably etched to provide filter holes therethrough and which is bent up to provide the cup shape. The filter surrounds the inlet in a manner to provide a filtering action. It has been found, however, that cup-shaped filters such as that as just described require a significantly high pressure on backflushing to dislodge the material caught in the filter. Although filters formed of material such as stainless steel may appear to the eye to be smooth, nevertheless there are sharp protuberances and burrs on the surfaces which can trap fibrous matter so that it is not easily dislodged from the filter by backflushing under normal flow pressure, necessitating increased flow pressure for the backflushing cycle. Also, as will be noted hereinbelow, such fibrous matter often becomes further entwined in the filter on backflushing, leading to permanent clogging of the filter after a relatively few cycles. This leads to a high frequency of instrument down time required to clean and/or replace the filter. Furthermore, filters of the type described in U.S. patent specification US-A-3,795,149 are preferably fixedly secured to the inlet of the take-off tube, requiring the replacement of the take-off tube assembly each time the filter needs to be replaced.

The use of disc or wafer-shaped filters in an in-line fluid filter arrangement is quite common. In U.S. patent specification US-A-4,263,140, there is disclosed such an arrangement which includes a pair of body sections coaxially secured to each other. A filter element is fixedly disposed transversely across a filter chamber defined by the body section intermediate a fluid filter inlet and outlet. This filter element includes an annular mounting flange interposed between mating annular body section end faces. A generally cup-shaped filter element support is fixedly located on at least the outlet side of the filter element and is dimensioned so that the filter element is at least partially received in the cup-shaped area thereof. This support includes an annular mounting rim which is also interposed between the body section end faces. The support allows the filter to experience greatly increased fluid pressure differentials across the filter element. The filter element mounting flange and the support mounting rim are dimensioned to at least extend to the outside diameter of the mating body section annular end faces. The body sections are rigidly affixed to each other at the end faces by means of a fusion type weld with at least a portion of the filter element mounting flange and the support mounting rim comprising a filler material for the weld to assist in producing a joint of high integrity. A pair of the filter element supports may be advantageously employed wherein the supports are in an opposed relationship to each other having the filter element positioned therebetween.

While in-line disc-type filters may prove effective in restricting the passage of particulate foreign matter through the conduit in which they are placed, it has been found that such filters, particularly when used in clinical apparatus for the analysis of whole blood, readily become clogged by the fibrin in the sample. As the aspirated sample of whole blood passes through the filter, the fibrous matter becomes trapped by the filter as intended, but problems often arise in cleaning the trapped matter from the filter. The fibrous matter generally has a length much greater than the width of the filtering element. Attempts to clean the filter by backflushing usually result in the fibrous strand becoming further entangled in the filter, and permanently lodged therein, clogging one or more passages in the filter. The filter is usually sized so that the entanglement of a few fibrous strands will not significantly effect fluid flow therethrough; however, it will be readily appreciated that the filter will eventually become so clogged by the fibrous matter that it seriously restricts fluid flow therethrough, and cannot be cleaned by simple backflushing. It must be replaced. Replacing such in-line filters requires shutting down the apparatus, thus interfering with sample analysis.

A representative sampling of other prior art filtering arrangements intended for filtering blood and other body fluids includes U.S. patent specifications US-A-3,493,503, US-A-3,882,026, US-A-4,170,056, US-A-4,157,967, US-A-4,476,023 and US-A-4,370,381, each of which describes a disc-type filter.

We have now devised a filter arrangement whereby potential clog-causing materials can be removed from a sample fluid stream while at the same time lengthening the time interval between filter backflushing and replacements.

According to the present invention, there is provided an in-line filter for filtering fibrous matter from a fluid sample, the filter comprising a filter mount body portion and a generally cylindrical filter body portion received in said filter mount body portion, said filter body portion having a pair of opposed faces and a multiplicity of passageways extending through said filter body portion substantially parallel to the longitudinal axis of said filter body portion and having opposite open ends at said opposed faces, said passageways having a predetermined axial length greater than the average length of said fibrous matter to facilitate trapping of only one end portion of fibrous matter at one of said opposed faces when a fluid sample with the fibrous matter flows through said passageways from said one opposed face to the other opposed face, the open ends of said passageways at said one opposed face having rounded edges to eliminate sharp protuberances or burrs and to permit the fibrous matter trapped at the open ends of said passageways at said one opposed face to be dislodged from said filter by backflushing.

The invention also provides a method for filtering a fluid sample comprising the steps of:
a) flowing said fluid through a filter arrangement, which filter arrangement includes a generally cylindrical body portion having opposed first and second faces and provided with a multiplicity of passageways substantially parallel to the longitudinal axis of said body portion extending between said opposed first and second faces, said passageways constructed and arranged to entrap fibrous matter carried in the fluid sample as the sample flows through said passageways from said first opposed face, said first and second opposed faces spaced apart a distance at least as great as the average length of said fibrous matter so that said fibrous matter will not extend beyond said second face and can be dislodged from said passageways by backflushing the open ends of said passageways at said one opposed face (66 or 68) having rounded edges (70a) to eliminate sharp protrusions or burrs;
b) entrapping said fibrous matter within said filter arrangement; and
c) backflushing said filter arrangement to dislodge said entrapped fibrous matter from said passageways.

The invention also includes an automated analyzer in which fluid is flowed through a conduit, including at least one filter of the invention.

In accordance with the present invention, the filter element is constructed and arranged to block the passage of fibrous and particulate matter which may be present in a liquid sample such as whole blood, while allowing the blood cells to pass. A further feature of the filter element is its construction which resists permanent clogging by such fibrous and particulate matter. Specifically, the filter element includes a generally cylindrical body portion having a multiplicity of equal size passageways therethrough. Preferably, the diameter of each passageway is smaller than the diameter of the smallest passageway or conduit in the automated clinical analyzer through which the filtered sample will flow. The passageways are oriented parallel to the longitudinal axis of the body portion. The body portion and consequently the passageways preferably have a length at least as long as the average length of the fibrous matter believed to be present in the whole blood sample. In such an arrangement, the fibrous matter trapped within the passageways is readily displaced therefrom by backflushing of the filter element.

In one embodiment, the filter element is part of an in-line filter assembly which assembly may include two complementary mating components. One component may take the form of a coupling provided with a male threaded portion adapted to be received into and engage the female threaded portion of the complementary mating component. This complementary mating component may be another coupling or an analysis system component, such as, a valve. Each complementary mating component is adapted to receive a liquid sample carrying conduit therethrough. The coupling is also adapted to receive a filter mount which holds a filter element constructed and arranged as discussed hereinabove. When the complementary mating components are assembled, their respective conduits and the filter element are brought into alignment to form a fluid tight seal.

In an alternative embodiment, the filter element is permanently retained in a section of conduit which is provided with appropriate connecting means to allow the conduit section to be readily removed from the apparatus when cleaning or replacement of the filter element is desired.

It is possible in accordance with the invention to make filters which can be re-used many times by backflushing while in place in the apparatus. Suitable cleansing liquids include isotonic saline for example. The liquids remove material which has accumulated on the upstream side of the filter element and in the longitudinal passages thereof.

The filter element may be cleared of debris by ultrasonic or conventional washing techniques. The material used in the filter construction is compatible with commonly used cleaning agents.

The invention includes the use of a filter element as described for filtering fibrous materials from a fluid in clinical analogues. The invention also includes a method of filtering in which a filter of the invention is disposed in the flow path of a fluid.

In order that the invention may be more fully understood, the following Examples are given by way of illustration only.
FIG. 1 is an exploded view of a portion of one embodiment of in-line filter assembly according to the present invention;
FIG. 2 is an enlarged sectional view showing the in-line filter assembly of FIG. 1 in an operational position in an analyzer;
FIG. 3 is an enlarged sectional view of one embodiment of the filter mount;
FIG. 4 is an end view of the filter mount of FIG. 3;
FIG. 5 is an enlarged end view of the embodiment of filter element;
FIG. 6 is a perspective view of another embodiment of in-line filter assembly according to the present invention; and
FIG. 7 is an enlarged sectional view of a portion of the embodiment of FIG. 6.

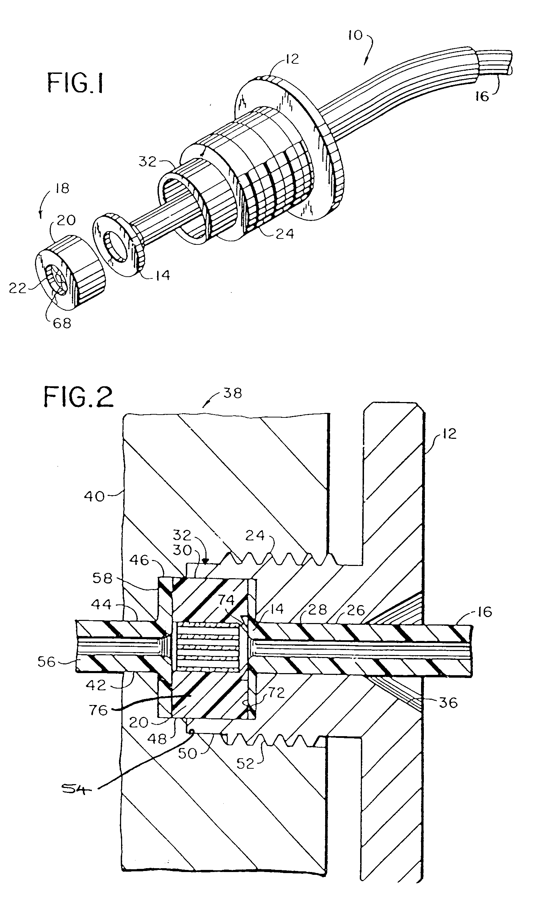

Referring now to the drawings, there is illustrated in FIG. 1 an exploded view of one preferred embodiment of the in-line filter arrangement of the present invention which is identified generally by the reference numeral 10. As will be appreciated, the in-line filter arrangement of the present invention is intended for use primarily in a clinical apparatus for analyzing blood samples, e.g. whole blood. A number of materials could be advantageously employed for the components of the in-line filter as are commonly used in such applications, although with respect to certain components described below preferred materials will be specified.

The filter arrangement 10 includes a filter adapter 12 adapted to be positioned on the flared end 14 of a conduit 16 as will be described hereinafter, for free rotational motion with respect to the conduit. A filter assembly 18 is provided and includes a filter mount 20 having a filter element 22 positioned therein. As can be best seen in FIG. 2, the filter adapter 12 may take the form of a conventional coupling that is threaded as shown at 24 for the screwing thereof into a complementary mating component, as will be described hereinafter. The coupling 12 has stepped bore 26 extending centrally thereof. Stepped bore 26 includes first and second portions 28 and 30 with the former being of a smaller diameter than the latter. The end 32 of the adapter 12 includes a relatively small unthreaded portion as indicated at 32 in FIG. 2. The stepped bore 26 may include a section of gradually increasing diameter 36 to allow a certain freedom of angular displacement or movement of the coupling 16 with respect to the adapter 12.

The conduit 16, which extends through the axial bore 26, terminates at its flared end 14 in bore section portion 30.

In this embodiment of the present invention, the filter arrangement is designed to be releasably fastened to a complementary system component, such as valve assembly or mating coupling component. With continued reference to FIG. 2, the coupling 12 is shown in conjunction with a mating coupling member 38. The mating coupling member 38 may comprise a body member 40 having a stepped, generally axial bore 42 extending therethrough, including axially aligned bore sections 44, 46, 48 and 50. Bore section 50 is threaded as indicated at 52 almost to the inner end thereof, leaving an unthreaded bore section 54 of relatively small axial extent at the inner bore end.

A conduit 56 extends through the axial bore 42 and terminates at a flared end 58 in bore section 46.

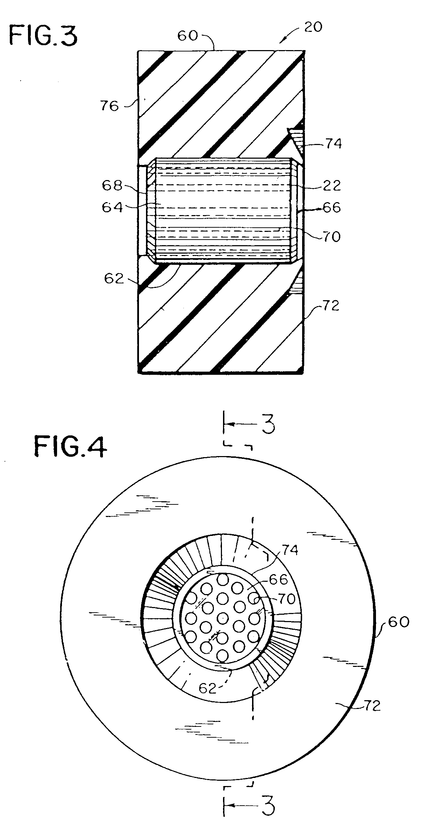

FIGS. 3, 4 and 5 comprise a more detailed showing of the preferred filter assembly, including filter mount 20 and filter element 22 as utilized in the present invention. More particularly, with reference to FIG. 3, the filter mount includes a generally cylindrical body portion 60 having an axially extending bore 62 therethrough. The bore 62 is sized with respect to the outer dimension of the cylindrical filter element 22 so that the latter may be close-fitted and then ring staked and thus securely held therein.

The filter element 22 includes a generally cylindrical body portion 64 having opposed, generally parallel faces 66 and 68 which are substantially perpendicular to the longitudinal axis of the filter element. The filter element is preferably formed of a glass material processed as Fotoform® glass material, manufactured in accordance with procedures established by Corning Glass Works, Corning, New York. Reference should be made to U.S. patent specification US-A-2,628,160 and US-A-4,572,611 in which the process for the manufacture of such material, and its composition, respectively, are disclosed. Alternatively, the filter element may be formed from ceramic, an extruded material such as polytetrafluoroethylene, or from other materials and by other techniques known to those skilled in the art. The body portion 64 preferably has a diameter of approximately .060 inches (1.52mm) and a length of approximately .080 inches (2mm). Extending axially through the filter element body portion 64 are a multiplicity of flow passages 70 as shown. Each flow passage 70 extends parallel to the axis of the body portion 64, and is approximately 0.008 inches (0.2mm) in diameter. In one preferred embodiment of the present invention, there are 19 passageways. Obviously, the exact number of passages in the filter element is dependent upon the diameter of the filter element and the required fluid flow rate. Ideally, the filter should be designed to provide the greatest percentage of open area possible without affecting the structural integrity of the filter. The number and size of the passages should be such as to minimize the effect of the filter on laminar flow of the sample through the conduit and the disruptive effects on sample cell integrity. It has been found that the use of about nineteen passages, each with a diameter of approximately .008 inch (0.2mm), has a minimal effect on pressure loss through the filter and is effective to trap fibrin and other clog-forming matter in the whole blood sample while allowing the cells in the sample to pass undisturbed therethrough. Preferably, the edge 70a of each passage 70 is rounded to eliminate sharp protuberances or burrs which may catch fibrous matter and prevent the same from being backflushed from the filter as will be described hereinafter.

Referring now back to FIG. 2, it is clear that the conduit 16 extends through the coupling 12 and its flare 14 is in firm surface contact with the face 72 of the filter mount 20. The latter may be provided with a deformable annulus 74 which is adapted to butt against the flared end 14 of conduit 16 to form a fluid-tight seal when the filter is assembled as will be described. Similarly, the conduit 56 extends through the coupling member 40 and its flared end 58 is in firm contact with the face 76 of the filter mount 20.

Assembly of the in-line filter arrangement of this embodiment is readily accomplished by the simple insertion of the conduits 16 and 56 into the passageways 26 and 42 so that their flared ends 14 and 58 are positioned in the bores 30 and 46, respectively. The filter mount 20 is then closely fitted into the axial bore 30 of coupling 12. Thereafter, the coupling is positioned so that the threads 24 thereon engage the mating threads 52 of the complementary member 38 and the coupling is then tightened into the complementary member to firmly press the flared ends 14 and 58 of the conduits against the opposed surfaces of the filter mount as depicted in FIG. 2 to form an extremely fluid-tight juncture, or pressure fitting there between, and place the same in unrestricted fluid flow communication.

As noted hereinabove, while the complementary mating component 38 has been described as a mating coupling or fitting, it will be appreciated that it may be, in the alternative, the body of a valve or other system component, in which instance, the conduit 56 and flare 58 may be replaced by a suitable seat or washer adapted to ensure a fluid-tight seal between the filter mount and component 38 when the in-line filter assembly is completed. In either situation, it will be appreciated that the filter assembly can be thought of as including first and second body components having axial passages therethrough, and when the components are assembled, the axial passages are brought into fluid communication, with the filter element positioned within the path of fluid flow.

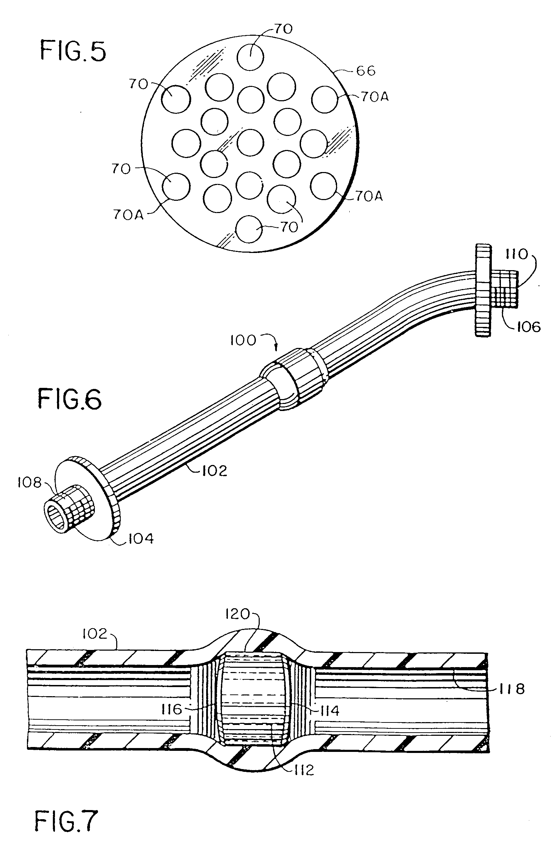

There is illustrated in FIGS. 6 and 7 another preferred embodiment of the present invention wherein the filter element is fixedly held within a section of flexible or heat shrinkable tubing. In this embodiment, generally identified by reference numeral 100, a length of tubing 102 is provided with conventional coupling members 104 and 106 at each end, for connecting the tubing section between various system components. While coupling members 104 and 106 are shown as having male threaded portion 108 and female threaded portion 110 respectively, other coupling means may be utilized, such as, for example, quick-disconnect fittings. A filter element 112 is similar to filter element 22 described hereinabove, but optionally may be provided as shown with convex faces 114 and 116 in lieu of the parallel faces 66 and 68 respectively as in element 22. As will be appreciated by those skilled in the art, this configuration has the effect of spreading any debris in the flowing stream across the upstream face of the filter rather than concentrating it at the longitudinal axis of the filter, since the pressure drop through the filter element is less for those passages closer to the tubing interior wall 118 than for those proximate the axial centerline of the tubing, and the fluid sample will be urged to the former passageways. The filter element 112 may then be fixedly situated in the length of conduit 102 as shown by first positioning the filter element within the tubing and then heat shrinking the tubing around the filter element to hold it firmly in position therein. Alternatively, the filter element 112 may be simply forced into flexible tubing such as silicone rubber. The axial extent 120 of the filter element body aids in maintaining the filter element in proper alignment within the conduit. As with the element 22, the axial extent of the filter element 112 need only be greater than the average length of the fibrous matter believed to be present in the sample.

Tests were performed to evaluate the effectiveness of the filter of the present invention, and particularly the effect such a filter would have on the cell integrity of whole blood samples. A filter arrangement such as that described in FIGs. 1 to 5 was installed in a Technicon H*1 hematology analyzer manufactured by Technicon Instruments Corporation, Tarrytown, New York. Comparison of the results of samples run on the analyzer so modified and identical samples run on an analyzer without the filter showed no detectable change on the parameters measured. Thus, it was demonstrated that the filter construction does not disturb the integrity of the cells in the sample.

Superior performance can be achieved in the filters of the present invention when the average length of the fibrin and any other fibrous material present that may become lodged in the passageways of the filter, is less than the longitudinal dimension of the filter element body, so that on backflushing of the filter, this material does not become entangled in adjacent passages as its downstream end does not extend beyond the face of the filter element and is readily flushed from the filter.

While the subject filter is adapted for prolonged use and backflushing before serious clogging, it will be necessary, at some point in its operation, to remove the filter element from the system to flush debris clogging the filter passageways. The clogged filter may be cleaned ultrasonically by displacing or dissolving the clogging material from the passageway. If the arrangement of the preferred embodiment illustrated in FIGS. 1 to 5 is used, the filter mount is removed from the coupling by disassembling the coupling 12 from the complementary component 38. It may then be placed in a small glass or polyethylene container with a suitable wash solution, which may have sodium hydroxide and/or sodium hypochlorite or other strong cleaning agents such as acids, as its active ingredient. The ultrasonic cleaner is then activated for approximately five minutes. The filter mount is then removed from the container and placed into distilled water with the ultrasonic cycle repeated for an additional five minutes. Such treatment should readily remove debris from the filter passages.

If the filter arrangement of the alternative embodiment of FIGS. 6 and 7 is used, the conduit section may be removed from the apparatus and placed in an ultrasonic cleaning device.

The filter assembly may be cleaned without the use of ultrasonics. The filter mount is placed in the wash solution such as that described hereinabove, and left to sit for at least one hour. It is then removed from the wash and placed in distilled water for approximately another hour.

It will be appreciated by those skilled in the art that the filter element should be formed from a material capable of withstanding strong cleaning agents.

While the in-line filter arrangement in accordance with the present invention has been described in conjunction with its use in an automated clinical analyzer for filtering fibrous matter from whole blood, it will be appreciated by those skilled in the art that our invention may have application in the filtering of fibrous material from other fluids.

## Claims

1. An in-line filter (10, 100) for filtering fibrous matter from a fluid sample, the filter comprising a filter mount body portion (60) and a generally cylindrical filter body portion (64) received in said filter mount body portion (60), said filter body portion (64) having a pair of opposed faces (66, 68) and a multiplicity of passageways (70) extending through said filter body portion (64) substantially parallel to the longitudinal axis of said filter body portion (64) and having opposite open ends at said opposed faces, said passageways (70) having a predetermined axial length the open ends of said passageways at said one opposed face (66 or 68) having rounded edges (70a) to eliminate sharp protrusions or burrs to facilitate trapping of only one end portion of fibrous matter at one of said opposed faces (66, 68) when a fluid sample with the fibrous matter flows through said passageways from said one opposed face to the other opposed face, the open ends of said passageways at said one opposed face (66 or 68) having rounded edges (70a) to eliminate sharp protuberances or burrs and to permit the fibrous matter trapped at the open ends of said passageways (70) at said one opposed face (66 or 68) to be dislodged from said filter by backflushing.

2. A filter according to claim 1, wherein said opposed faces (114, 116) are convex.

3. A filter according to claim 1 or 2, wherein said filter body portion (64, 120) is of glass.

4. A filter according to claim 1, 2 or 3, wherein the body portion (64) has a diameter of approximately 1.52mm (0.060 inches) and an axial length of approximately 2mm (0.080 inches).

5. A filter according to claim 4, wherein said passageways (70) have a diameter of approximately 0.2mm (0.008 inches).

6. A filter according to claim 5, wherein said filter body portion (64) has nineteen of said passageways (70).

7. A filter according to any of claims 1 to 6, further comprising a first body component (12) having an axial passage (26) therethrough between opposite body ends; a cavity (30) in said first body component intermediate said ends; and a second body component (40) having an axial passage (42), said first and second body components constructed and arranged to be releasably secure to each other whereby said axial passages are in fluid communication; and wherein said filter arrangement further includes a filter mount (20) adapted to receive said generally cylindrical body portion (64), said filter mount being received within said cavity (30).

8. A method for filtering a fluid sample comprising the steps of:
a) flowing said fluid through a filter arrangement, which filter arrangement includes a generally cylindrical body portion (64) having opposed first and second faces (66,68) and provided with a multiplicity of passageways (70) substantially parallel to the longitudinal axis of said body portion (64) extending between said opposed first and second faces (66,68), said passageways (70) constructed and arranged to entrap fibrous matter carried in the fluid sample as the sample flows through said passageways (70) from said first opposed face (66 or 68), said first and second opposed faces (66,68) spaced apart a distance at least as great as the average length of said fibrous matter so that said fibrous matter will not extend beyond said second face (66 or 68) and can be dislodged from said passageways (70) by backflushing the open ends of said passageways at said one opposed face (66 or 68) having rounded edges (70a) to eliminate sharp protrusions or burrs;
b) entrapping said fibrous matter within said filter arrangement; and
c) backflushing said filter arrangement to dislodge said entrapped fibrous matter from said passageways (70).

9. A method according to claim 8, wherein said opposed faces (66,68) are substantially parallel to each other, and substantially perpendicular to the longitudinal axis of said body portion.

10. A method according to claim 8 or 9, wherein said opposed faces (114,116) are both convex.

11. A method according to claim 8, 9 or 10, wherein said fluid sample is whole blood.

## Patentansprüche

1. In einer Rohrleitung angeordnetes Filter (10, 100) zum Abfiltrieren faserförmigen Materials aus einer Fluidprobe, wobei das Filter ein Filtergehäuse (60) und einen allgemein zylindrischen eigentlichen Filterkörper (64), der in dem Filtergehäuse (60) aufgenommen ist, umfaßt, der Filterkörper (64) ein Paar einander gegenüberliegende Flächen (66, 68) und eine Vielzahl von Durchlässen (70), die sich durch den Filterkörper (64) im wesentlichen parallel zu der Längsachse des Filterkörpers (64) erstrecken und an den einander gegenüberliegenden Flächen offene Enden aufweisen, die Durchlässe (70) eine vorherbestimmte axiale Lange aufweisen, die größer ist als die mittlere Länge des faserförmigen Materials, um das Festhalten von lediglich einem Endabschnitt des faserförmigen Materials an einer der einander gegenüberliegenden Flächen (66, 68) zu erleichtern, wenn eine Fluidprobe mit dem faserförmigen Material durch die Durchlässe hindurch von der einen der einander gegenüberliegenden Flächen zu der anderen strömt und die offenen Enden der Durchlässe an der einen der einander gegenüberliegenden Flächen (66 oder 68) abgerundete Ränder (70A) aufweisen, um scharfe Vorsprünge oder Grate zu vermeiden und es zu ermöglichen, daß das faserförmige Material, das an den offenen Enden der Durchlässe (70) an der einen der einander gegenüberliegenden Flächen (66 oder 68) festgehalten worden ist, durch Rückspülen aus dem Filter entfernt wird.

2. Filter gemäß Anspruch 1, wobei die einander gegenüberliegenden Flächen (114, 116) konvex sind.

3. Filter gemäß Anspruch 1 oder 2, wobei der Filterkörper (64, 120) aus Glas besteht.

4. Filter gemäß Anspruch 1, 2 oder 3, wobei der Filterkörper (64) einen Durchmesser von etwa 1,52 mm (0,060 Zoll) und eine axiale Länge von etwa 2 mm (0,080 Zoll) besitzt.

5. Filter gemäß Anspruch 4, wobei die Durchlässe (70) einen Durchmesser von etwa 0,2 mm (0,008 Zoll) aufweisen.

6. Filter gemäß Anspruch 5, wobei der Filterkörper (64) neunzehn Durchlässe (70) aufweist.

7. Filter gemäß einem der Ansprüche 1 bis 6, außerdem enthaltend ein erstes Umschließungsteil (12) mit einem axialen Durchlaß (26) zwischen seinen beiden gegenüberliegenden Enden; eine Ausnehmung (30) in dem ersten Umschließungsteil zwischen seinen beiden Enden; und ein zweites Umschließungsteil (40) mit einem axialen Durchlaß (42), wobei erstes und zweites Umschließungsteil derartig aufgebaut und angeordnet sind, daß sie miteinander auseinandernehmbar befestigt werden können, wodurch die axialen Durchlässe miteinander in Verbindung stehen, und wobei die Filteranordnung außerdem ein Filtergehäuse (20) aufweist, das derart eingerichtet ist, daß es den allgemein zylindrischen Filterkörper (64) aufnehmen kann, und das selbst von der Ausnehmung (30) aufgenommen wird.

8. Verfahren zum Filtrieren einer Fluidprobe, bestehend aus folgenden Stufen:
a) Strömenlassen des Fluids durch eine Filteranordnung, die einen allgemein zylindrischen Filterkörper (64) mit einer ersten und dieser gegenüberliegenden zweiten Fläche (66, 68) enthält und eine Vielzahl von praktisch zur Längsachse des Filterkörpers (64) parallelen Durchlässen (70) aufweist, die sich zwischen der ersten und dieser gegenüberliegenden Fläche (66, 68) erstrecken und derart aufgebaut und angeordnet sind, daß sie faserförmiges Material, das mit der Fluidprobe mitgeführt wird, während die Probe von der ersten der gegenüberliegenden Flächen (66 oder 68) aus durch die Durchlässe (70) strömt, festhält, wobei die erste und die dieser gegenüberliegende zweite Fläche (66, 68), voneinander mindestens in einem solchen Abstand voneinander angeordnet sind, wie die mittlere Länge des faserförmigen Materials beträgt, so daß sich das faserförmige Material nicht bis über die zweite Fläche (66 oder 68) hinaus erstreckt und von den Durchlässen (70) durch Rückwaschen entfernt werden kann, wobei die offenen Enden der Durchlässe an der einen der gegenüberliegenden Flächen (66 oder 68) abgerundete Kanten (70A) aufweisen, um scharfe Vorsprünge oder Grate zu vermeiden;
b) Festhalten des faserförmigen Materials innerhalb der Filteranordnung; und
c) Rückwaschen der Filteranordnung zum Entfernen des festgehaltenen faserförmigen Materials aus den Durchlässen (70).

9. Verfahren gemäß Anspruch 8, wobei die einander gegenüberliegenden Flächen (66, 68) praktisch parallel zueinander und praktisch senkrecht zur Längsachse des Filterkörpers angeordnet sind.

10. Verfahren gemäß Anspruch 8 oder 9, wobei die einander gegenüberliegenden Flächen (114, 116) beide konvex sind.

11. Verfahren gemäß Anspruch 8, 9 oder 10, wobei die Fluidprobe Gesamtblut ist.

## Revendications

1. Filtre en ligne (10, 100) pour filtrer de la matière fibreuse d'un échantillon de fluide, le filtre comprenant une partie corps (60) de support de filtre et une partie corps (64) de filtre de forme générale cylindrique reçue dans ladite partie corps (60) de support de filtre, ladite partie corps (64) de filtre ayant deux faces (66, 68) opposées et une multitude de passages (70) traversant ladite partie corps (64) de filtre sensiblement parallèles à l'axe longitudinal de ladite partie corps (64) de filtre et ayant auxdites faces opposées des extrémités ouvertes opposées, lesdits passages (70) ayant une longueur axiale prédéterminée supérieure à la longueur moyenne de ladite matière fibreuse pour faciliter la rétention de seulement une partie d'extrémité de la matière fibreuse à une desdites faces opposées (66, 68) lorsqu'un échantillon de fluide avec la matière fibreuse circule à travers lesdits passages d'une dite face opposée à l'autre face opposée, les extrémités ouvertes desdits passages à une dite face opposée (66 ou 68) ayant des bords arrondis (70a) pour éliminer les barbes ou les saillies acérées et pour permettre à la matière fibreuse retenue aux extrémités ouvertes desdits passages (70) à une dite face opposée (66 ou 68) d'être enlevée dudit filtre en procédant au nettoyage par inversion du sens d'écoulement.

2. Filtre selon la revendication 1, où lesdites faces opposées (114, 116) sont convexes.

3. Filtre selon la revendication 1 ou 2, où ladite partie corps (60, 120) de filtre est de verre.

4. Filtre selon la revendication 1, 2 ou 3, où la partie corps (64) a un diamètre d'environ 1,52 mm (0,060 pouce) et une longueur axiale d'environ 2 mm (0,080 pouce).

5. Filtre selon la revendication 4, où lesdits passages (70) ont un diamètre d'environ 0,2 mm (0,008 pouce).

6. Filtre selon la revendication 5, où ladite partie corps (64) de filtre comporte dix - neuf desdits passages (70).

7. Filtre selon une quelconque des revendications 1 à 6, comprenant en outre un premier élément corps (12) ayant, entre les extrémités de corps opposées, un passage axial (26) qui le traverse; une cavité (30) dans ledit premier élément corps intermédiaire auxdites extrémités; et un second élément corps (40) ayant un passage axial (42), lesdits premier et second éléments corps étant élaborés et agencés pour bien se fixer l'un à l'autre, de manière à pouvoir se démonter, grâce à quoi une communication pour le fluide est établie entre lesdits passages axiaux; et où ledit dispositif de filtre comprend en outre un support (20) de filtre adapté pour recevoir ladite partie corps (64) de forme générale cylindrique, ledit support de filtre étant reçu à l'intérieur de ladite cavité (30).

8. Procédé pour filtrer un échantillon de fluide comprenant les étapes de:
a) circulation dudit fluide à travers un dispositif de filtre, lequel dispositif de filtre comprend une partie corps (64) de forme générale cylindrique ayant des première et seconde faces opposées (66, 68) et pourvue d'une multitude de passages (70) sensiblement parallèles à l'axe longitudinal de ladite partie corps (64) s'étendant entre lesdites première et seconde faces opposées (66, 68), lesdits passages (70) étant élaborés et agencés pour retenir de la matière fibreuse transportée dans l'échantillon de fluide lorsque l'échantillon circule à travers lesdits passages (70) à partir de ladite première face opposée (66 ou 68), lesdites première et seconde faces opposées (66, 68) étant espacées l'une de l'autre d'une distance au moins égale à la longueur moyenne de ladite matière fibreuse de manière à ce que ladite matière fibreuse ne s'étende pas au-delà de ladite seconde face (66 ou 68) et puisse être enlevée desdits passages (70) en procédant au nettoyage par inversion du sens d'écoulement, les extrémités ouvertes desdits passages à une dite face opposée (66 ou 68) ayant des bords arrondis (70a) pour éliminer les barbes ou les saillies acérées;
b) rétention de ladite matière fibreuse à l'intérieur dudit dispositif de filtre; et
c) nettoyage par inversion du sens d'écoulement dudit dispositif de filtre pour enlever ladite matière fibreuse retenue desdits passages (70).

9. Procédé selon la revendication 8, où lesdites faces opposées (66, 68) sont sensiblement parallèles l'une à l'autre, et sensiblement perpendiculaires à l'axe longitudinal de ladite partie corps.

10. Procédé selon la revendication 8 ou 9, où lesdites faces opposées (114, 116) sont toutes les deux convexes.

11. Procédé selon la revendication 8, 9 ou 10, où ledit échantillon de fluide est du sang complet.
